# EUROPEAN PATENT APPLICATION

(11) **EP 2 192 514 A1**
(43) Date of publication of application: **02.06.2010**
(21) Application number: 08305839.6
(22) Date of filing: 26.11.2008
(51) Int. Cl.: G06F 21/00, H04N 7/24, H04N 7/16

(54) **Method and system for processing digital content according to a workflow**

(71) Applicant: Thomson Licensing, 92443 Issy-les-Moulineaux Cedex (FR)
(72) Inventor: Diehl, Eric, 35340 Liffre (FR); Durand, Alain, 35000 Rennes (FR); Onno, Stéphane, 35760, Saint Grégoire (FR)
(74) Representative: Ruellan-Lemonnier, Brigitte

(57) **Abstract**

A method of processing digital content following a workflow. A processing device (400) receives the digital content and a license for the digital content, the license comprising workflow information about a process chain, which comprises a present node and a following node; decrypts the license; verifies if it may process the content by verifying if it corresponds to the present node. If the processing device may process the digital content, it processes the digital content to obtain processed content and generates a new license comprising updated workflow information, wherein the following node is set as a new present node. Also provided is a processing device.

## Description

### FIELD OF THE INVENTION

The present invention relates generally to digital content processing, and in particular to workflows for digital content.

### BACKGROUND OF THE INVENTION

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

Content, such as multimedia content - e.g. films and music - documents, photos and so on often need to be processed before it is released for the enjoyment of the end user.

Films, for example, pass many processing steps from the actual recording to the release: de-rushing, mixing, addition of digital effects, dubbing, subtitling, and so on.

It will be readily appreciated that a content provider has two requirements for a processing (also called post-processing) system: 1) strict and traceable processing operations, and 2) easy transmission and duplication of the content. The person skilled in the art will appreciate that prior art systems satisfy one or the other requirement, but not both.

Analogue systems generally satisfy the first requirement. As content is stored on tapes or film reels, it is relatively easy to control the processing: a particular content remains with a certain department until the tape is sent to the next department. In addition, it is also possible to trace the tape in case of theft. On the other hand, transmission of the content is less straight-forward, as this requires sending the physical tape, which naturally is difficult, particularly if long distances are involved. It is also difficult to provide the content to more than one entity at once, as the content has to be physically duplicated. In addition, erasing and/or destroying content after use may also provide constraints on the users.

Digital systems provide easy transmission and duplication of content. However, it is much more difficult to control the processing of the content: if the content resides on a server, it is very difficult to control who has access to it and errors may often be made if one department erroneously believes that the previous department has finished processing the content.

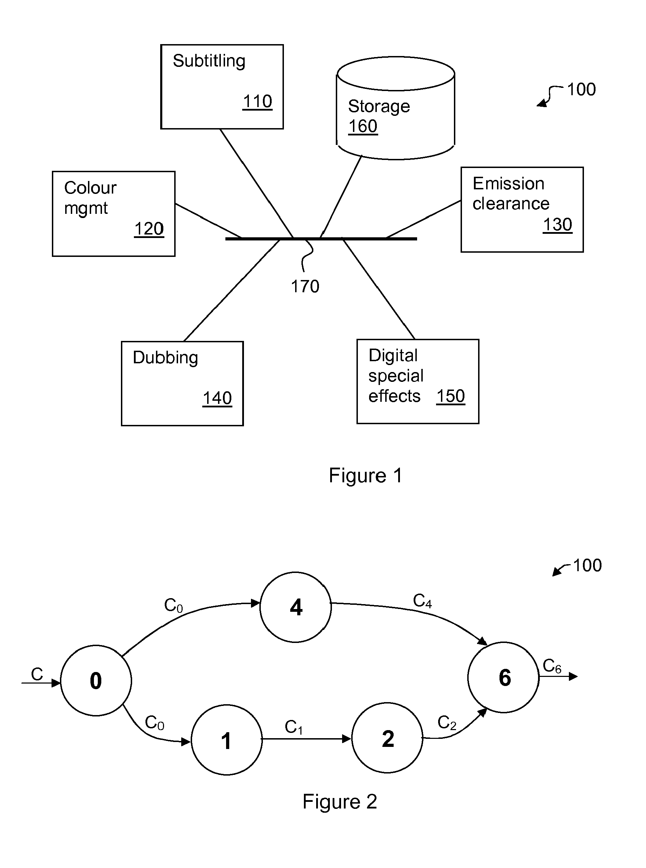

Figure 1 shows an exemplary processing system in which the invention may be used. The system 100 comprises a subtitling device 110, a colour management device 120, a dubbing device 140, a digital special effects device 150, a storage device 160, and an emission clearance device 130, all connected by a network 170.

In the system of Figure 1, it may for example be required that content pass colour management 120 and digital effects 150 (in no particular order) before being sent to dubbing 140 and optionally further to subtitling 110, before passing through emission clearance 130. As every device has access to the storage 160, it is difficult to control that the workflow is respected.

This difficulty in digital systems is inherent in Digital Rights Management (DRM) Systems. DRM controls access to the content according to usage restrictions. The content is encrypted and a separate license is provided to the end user.

A DRM architecture comprises a content provider, a content distributor, a license issuer, and content users, and has the following characteristics: 1) they are built around the servers, 2) an end user is not allowed to create new content and licenses from the obtained content, and 3) the right to decrypt the content is global - the user either has it or he doesn't.

It will thus be appreciated that most prior art DRM solutions are not appropriate to fulfil the two requirements listed hereinbefore.

International application PCT/EP08/053181 presents a solution in which a workflow for digital content is ensured by having each processing device store a number of rules linking decryption keys and encryption keys. Imagine that digital content is supposed to be treated by a colour management device, a dubbing device and a subtitling device, in that order. The content is ingested into the system by encrypting it using an encryption key for which only the colour management device has the corresponding decryption key. The colour management device stores a rule stating that content decrypted using the decryption key should be encrypted using an encryption key for which only the dubbing device possesses the corresponding decryption key. The same scheme is applied to the other devices. As such, the workflow is ensured.

While this solution works well in many cases, it can in some instances be difficult to manage the keys in the system, especially when the content is to be treated by external devices.

It can thus be appreciated that there is a need for an alternative solution that enables a processing system in which digital content may be easily distributed and duplicated, while it also imposes strict processing operations, this solution being called Digital Processing Management (DPM).

The present invention provides such a solution, with a number of variants.

### SUMMARY OF THE INVENTION

In a first aspect, the invention is directed to a method of processing digital content following a workflow. A processing device receives the digital content and a license for the digital content, the license comprising workflow information about a process chain, which comprises a present node and a following node; decrypts the license; verifies if it may process the content by verifying if it corresponds to the present node. If the processing device may process the digital content, it processes the digital content to obtain processed content and generates a new license comprising updated workflow information, wherein the following node is set as a new present node.

In a first preferred embodiment, the digital content is encrypted and the license comprises a decryption key. The processing device decrypts the digital content using the decryption key; generates an encryption key; and encrypts the processed content using the encryption key. In addition, the new license further comprises the encryption key.

In a second preferred embodiment, the process chain comprises a plurality of present nodes.

In a third preferred embodiment, the process chain comprises a plurality of following nodes.

In a fourth preferred embodiment, the generation step further comprises deleting a preceding node from the workflow information.

In a second aspect, the invention is directed to a device for processing digital content following a workflow. The device comprises a unit adapted to receive the digital content; a unit adapted to receive a license for the digital content, the license comprising workflow information about a process chain, which comprises a present node and a following node; a unit adapted to decrypt the license; a unit adapted to verify if the processing device may process the content by verifying if the processing device corresponds to the present node; a unit adapted to process the digital content to obtain processed content; and a unit adapted to generate a new license comprising updated workflow information, wherein the following node is set as a new present node.

In a first preferred embodiment, the digital content is encrypted, the license comprises a decryption key, and the processing device further comprises a unit adapted to extract the decryption key from the license; a unit adapted to decrypt the digital content using the decryption key; a unit adapted to generate an encryption key; and a unit adapted to encrypt the processed content using the encryption key. The unit for generating a new license is further adapted to include the encryption key in the new license further.

In a second preferred embodiment, the process chain comprises a plurality of present nodes.

In a third preferred embodiment, the process chain comprises a plurality of following nodes.

### BRIEF DESCRIPTION OF THE DRAWINGS

Preferred features of the present invention will now be described, by way of non-limiting example, with reference to the accompanying drawings, in which:
Figure 1, already discussed, exemplary processing system in which the invention may be used;
Figure 2 illustrates a process graph for use with the present invention;
Figure 3 illustrates content ingest according to a preferred embodiment of the invention; and
Figure 4 illustrates a system for digital content processing according to a preferred embodiment of the invention.

In the Figures, the represented blocks are purely functional entities, which do not necessarily correspond to physically separate entities. These functional entities may be implemented as hardware, software, or a combination of software and hardware; furthermore, they may be implemented in one or more integrated circuits.

### PREFERRED EMBODIMENT OF THE INVENTION

The main inventive idea of the present invention is the use of a secured process graph for digital content, the process graph being consulted to decide if access to the digital content (preferably by delivery of a decryption key) is to be given or not. Figure 2 illustrates an example of such a process graph 200. The process graph 200 has an entry node 0 and an exit node 6, and two possible paths between these nodes. A first path passes through node 4, while the second path passes through nodes 1 and 2.

According to the process graph 200, content C is first treated at node 0 to produce processed content C₀. The processed content C₀ then passes through one of the two paths, usually at the choice of a user. If the first path is chosen, the processed content C₀ is treated at node 4 to generate processed content C₄. On the other hand, if the second path is chosen, then the processed content C₀ is first treated at node 1 to generate processed content C₁ and then at node 2 to generate processed content C₂. Finally, node 10 processes processed content C₄ or processed content C₂ to generate processed content C₁₀.

For example, node 0 can be a special effects module, node 1 a subtitling module, node 2 a dubbing module, node 4 an editing module adapted to generate a preview, and node 10 a release clearance module. As such it will be appreciated that a node not necessarily modifies the content. It will also be appreciated that content may pass through both paths of the process graph 200, which would generate two different processed contents C₁₀ and C'₁₀.

### First preferred embodiment

In a first preferred embodiment, the process graph for a content is comprised in auxiliary data necessary to access the content, advantageously a license for the content, and the processing device takes the decision as to whether or not it is allowed to process the content.

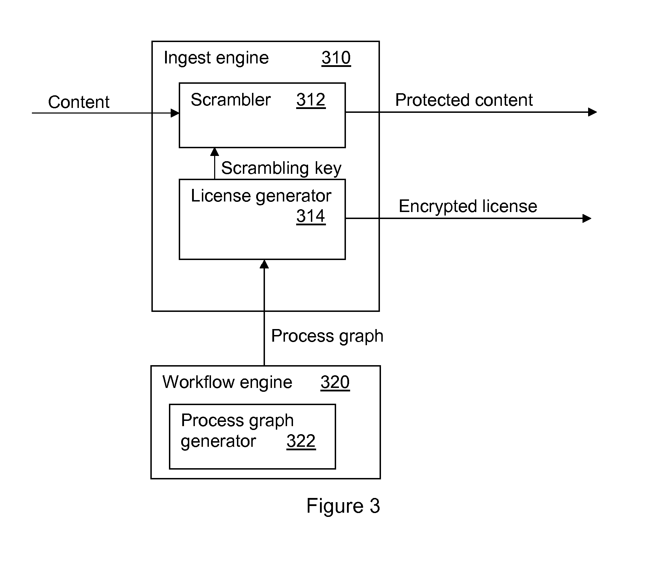

Figure 3 illustrates ingest of content, i.e. creation of protected content from unprotected content, according to a preferred embodiment of the present invention. Content is received by an ingest engine 310 that also receives, possibly upon request, a process graph for the content from a workflow master 320, wherein the process graph is generated by a process graph generator 322. A license generator 314 generates a scrambling key that is passed to a scrambler (or encryption unit) 312. The license generator 314 further generates a license comprising the process graph, the scrambling key and a position indicator (preferably indicating the node that the ingest engine corresponds to), encrypts the license (preferably with 128-bit AES in counter (CTR) mode) using a license key, and outputs the encrypted license. The scrambler 312 protects, by scrambling or any other suitable encryption means (preferably 128-bit AES), the content and outputs protected content. The scrambling key is intended to securely bind the content to the protected content; other means of doing this, such as through the use of watermarks or Message Authentication Codes (MACs), are also envisaged.

A process graph advantageously has the following structure:

```
     {
           number of nodes
           for j=0 to number of nodes
           {
                  node description
           }
     }
```

For example, the process graph of Figure 1 comprises five nodes: 0, 1, 2, 4, and 10.

Node description advantageously has the following structure:

```
     {
           node number
           number of successors
           for j=1 to number of successors
                  {
                         node number
                  }
           flag generic
           flag authorized edit
           node ID
           private data
     }
```

Node number is a unique identifier of a node in the process graph. For example, the node number of the initial node in the process graph of Figure 2 is 0. It will be appreciated that the node number does not necessarily identify a particular physical device; it can for example identify subtitling machines.

Number of successors indicates the number of possible direct successor of a node. For example, node 0 has two successors, 1 and 4, node 1 has a single successor, node 2, while node 10 has no successor, something that advantageously is indicated by 0 or null.

Flag generic is a Boolean flag that indicates whether Node ID is a unique identifier of a specific device or a class identifier for a group or type of devices.

Flag authorize edit is a Boolean flag that indicates whether or not the node may edit the process graph.

Private data is an optional field, for example for comments.

For illustrational purposes, the process graph shown in Figure 2 has the following structure (flag generic, flag authorized edit, node ID, and private data are not included for ease of comprehension):

```
     {
           5 // there are five nodes
           {
                  0 // initial node
                  2 // it has two successors
                  1 // first successor
                  3 // second successor
           }
           {
                  1
                  1
                  2
           }
           {
                  2
                  1
                  10
           }
           {
                  4
                  1
                  10
           }
           {
                  10
                  0
           }
     }
```

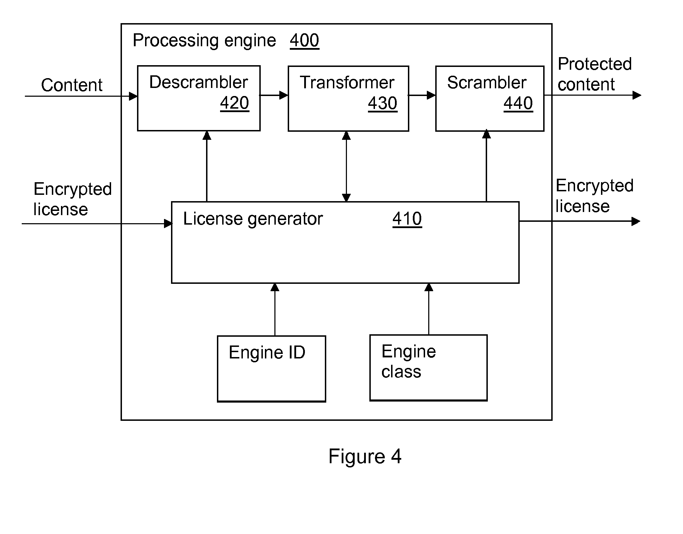

Figure 4 illustrates processing of content according to a first preferred embodiment of the present invention. A processing engine 400 is the physical implementation of a node. The processing engine 400 comprises a license handler 410 adapted to receive and decrypt a received license using the license key (or a public license key corresponding to the private license key). The license handler 410 then checks the process graph and the position indicator to find the node that most recently processed the data, i.e. the preceding node. Then the license handler 410 compares the Node ID of all of the successors of the preceding node with, depending on the value of the corresponding Flag generic, either its engine ID or its engine class. The engine ID and the engine class are preferably stored in a non-volatile memory (not shown) accessible only by the license handler 410. This memory, or another memory, could also store the license key.

If the engine ID or engine class does not match the necessary value, then the license handler 410 preferably informs the user that the content may not be processed, possibly adding the Node ID in the message.

However, if the engine ID or engine class does match the expected value, then the license handler 410 extracts the scrambling key and forwards it to a descrambler 420 that unprotects the content (by descrambling or another suitable method, depending on the chosen protection method) and forwards the content to a transformer 430 that processes the content, possibly using information in Private data to which it may also add or modify information. As already mentioned, it will be appreciated that the content is not necessarily modified during by the processing. The transformer 430 then forwards the content to a scrambler 440 that re-scrambles (or re-protects) the content, either using the received scrambling key or, preferably, a new scrambling key generated by the license handler 410. The scrambler 440 then outputs the scrambled content.

The license handler generates a new license with the process graph, the scrambling key used by the scrambler 440, and an updated position indicator that corresponds to the position of the processing engine 400 in the processing graph, i.e. the node that it corresponds to. The license is then scrambled using the license key and output.

It will thus be appreciated that the present invention provides a solution with a plurality of embodiments for digital process management that can ensure that the digital content is processed according to a determined workflow.

Each feature disclosed in the description and (where appropriate) the claims and drawings may be provided independently or in any appropriate combination. Features described as being implemented in hardware may also be implemented in software, and vice versa. Connections may, where applicable, be implemented as wireless connections or wired, not necessarily direct or dedicated, connections.

Reference numerals appearing in the claims are by way of illustration only and shall have no limiting effect on the scope of the claims.

## Claims

1. A method of processing digital content following a workflow, the method comprising the steps, at a processing device (400) of:
- receiving the digital content;
- receiving a license for the digital content, the license comprising workflow information about a process chain, which comprises a present node and a following node;
- decrypting the license;
- verifying if the processing device (400) may process the content by verifying if the processing device (400) corresponds to the present node; and
if the processing device may process the digital content:
- processing the digital content to obtain processed content; and
- generating a new license comprising updated workflow information, wherein the following node is set as a new present node.

2. The method of claim 1, wherein the digital content is encrypted, the license comprises a decryption key, and the method further comprises the steps of:
- decrypting the digital content using the decryption key;
- generating an encryption key; and
- encrypting the processed content using the encryption key; and
wherein the new license further comprises the encryption key.

3. The method of claim 1, wherein the process chain comprises a plurality of present nodes.

4. The method of claim 1, wherein the process chain comprises a plurality of following nodes.

5. The method of claim 1, wherein the generation step further comprises deleting, from the workflow information, a preceding node.

6. A device (400) for processing digital content following a workflow, the device comprising:
- a unit (420) adapted to receive the digital content;
- a unit (410) adapted to receive a license for the digital content, the license comprising workflow information about a process chain, which comprises a present node and a following node;
- a unit (410) adapted to decrypt the license;
- a unit (410) adapted to verify if the processing device (400) may process the content by verifying if the processing device (400) corresponds to the present node;
- a unit (430) adapted to process the digital content to obtain processed content; and
- a unit (410) adapted to generate a new license comprising updated workflow information, wherein the following node is set as a new present node.

7. The device of claim 3, the digital content being encrypted, the license comprising a decryption key, wherein the device further comprises:
- a unit (410) adapted to extract the decryption key from the license;
- a unit (420) adapted to decrypt the digital content using the decryption key;
- a unit (410) adapted to generate an encryption key; and
- a unit (440) adapted to encrypt the processed content using the encryption key; and
wherein the unit (410) for generating a new license is further adapted to include the encryption key in the new license further.

8. The device of claim 5, wherein the process chain comprises a plurality of present nodes.

9. The device of claim 5, wherein the process chain comprises a plurality of following nodes.
